# EUROPÄISCHE PATENTSCHRIFT

(11) **EP 1 246 858 B1**
(45) Veröffentlichungstag und Bekanntmachung des Hinweises auf die Patenterteilung: **24.03.2004**
(21) Anmeldenummer: 00991174.4
(22) Anmeldetag: 12.12.2000
(51) Int. Cl.: C08G 18/40, C08G 18/76

(54) **FLAMMWIDRIGER HR-KALTFORMSCHAUM MIT REDUZIERTER RAUCHGASINTENSITÄT UND -TOXIZITÄT**
FLAME-RESISTANT HR COLD-MOULDED FOAM WITH REDUCED FUME DENSITY AND TOXICITY
MOUSSE HR MOULEE A FROID ININFLAMMABLE A INTENSITE ET TOXICITE DE FUMEES REDUITES

(30) Priorität: 23.12.1999 DE 19962911
(43) Veröffentlichungstag der Anmeldung: 09.10.2002
(73) Patentinhaber: Bayer MaterialScience AG, 51368 Leverkusen (DE)
(72) Erfinder: HERRMANN, Marc, 42799 Leichlingen (DE); SEIFERT, Peter, 53797 Lohmar (DE); BOHNE, Franz-Josef, 42799 Leichlingen (DE)
(86) Internationale Anmeldenummer: PCT/EP2000/012593
(87) Internationale Veröffentlichungsnummer: WO 2001/048047

(56) Entgegenhaltungen:
- DE-A- 19 707 577
- JOURNAL OF CELLULAR PLASTICS, Bd. 29, Nr. 1, Februar 1993 (1993-02), Seiten 43-56, XP000345190 Lancaster,US

## Beschreibung

Die Erfindung betrifft flammwidrige HR-Kaltformschäume mit reduzierter Rauchgasintensität und -toxizität, Verfahren zu ihrer Herstellung und deren Verwendung.

Kalthärtende Polyurethan-Weichformschaumstoffe werden u.a. als Sitze, Lehnen oder Kopfstützen in Automobilen, Schienen- und Wasserfahrzeugen, Flugzeugen und im Möbelbereich angewendet. In allen oben angeführten Bereichen spielt die Flammwidrigkeit der Schaumstoffe eine Rolle. Insbesondere bei Schienenfahrzeugen, Flugzeugen und Möbeln sind die Anforderungen an die Flammwidrigkeit sehr hoch. Um die entsprechenden Normen, wie z.B. BS 5852, Part 2, Crib Ignition Source V, CSE RF4/83 oder UIC 564/2 bzw. DIN 54341, ASTM E 162; California TB 133 erfüllen zu können, wird dem Schaum Melamin als Flammschutzmittel zugesetzt. Nachteilig ist dabei, dass ein Feststoff unter Staubentwicklung in die Polyolformulierung eingerührt werden muss. Darüber hinaus sedimentiert der Feststoff Melamin aus der Polyolformulierung, was die Verarbeitung schwierig gestaltet. Das Sedimentieren des Melamins kann durch Einsatz spezieller stabilisierter Melamin-Dispersionen in Polyethern verhindert werden, wie in DE-OS 195 40 809 und EP-A 835 905 beschrieben. Darüber hinaus werden durch den Einbau des Melamins in die Polymermatrix des Schaumes die mechanischen Eigenschaften der Schaumstoffe, insbesondere die Zugfestigkeit, die Bruchdehnung und die Weiterreißfestigkeit, negativ beeinflusst. Ein weiterer Nachteil besteht darin, dass bei der Verbrennung hohe Rauchgasintensitäten und -toxizitäten auftreten.

Aus "Polyurethanes World Congress 1991", Technomic Publishing, Basel, Lancaster 1991, S.615ff. geht hervor, dass sich flammwidrige HR-Blockschaumstoffe durch die Kombination von reinem Toluoldiisocyanat mit einem PHD-Polyol und flüssigen Phosphorhalogenverbindungen erhalten lassen. Ein mit diesen Komponenten hergestellter HR-Kaltformschaum erfüllt jedoch nicht die Anforderungen, die in BS 5852, Part 2, Crib V gestellt werden, was möglicherweise auf den unterschiedlichen Polymeraufbau in Blockschaum und Formschaum zurückgeführt werden kann. Eine Übertragung der an Blockschaum erhaltenen Ergebnisse auf Formschaum ist somit nicht möglich.

Es wurde nun gefunden, dass sich durch Umsetzung von Mischungen aus TDI und MDI mit PHD- oder PIPA-Polymerpolyolen HR-Kaltfbrmschäume mit verringerter Brennbarkeit, Rauchgasdichte und -toxizität erhalten lassen.

Gegenstand der Erfindung ist daher ein HR-Kaltformschaum, erhältlich durch Umsetzung von
a) Mischungen aus TDI und MDI im Gewichtsverhältnis 95:5 bis 60:40 mit
b) Dispersionen von Polymeren enthaltenden höhermolekularen Hydroxylverbindungen, die durch Umsetzung von Mono- und/oder Polyisocyanaten mit primäre und oder sekundäre Aminogruppen aufweisenden Polyaminen und/oder Hydrazinen und/oder Hydraziden und/oder Alkanolaminen in einem 1 bis 8 primäre und/oder sekundäre Hydroxylgruppen aufweisenden Polyether mit einem zahlenmittleren Molekulargewicht von 400 bis 16000 hergestellt worden sind,
c) in Gegenwart von chemischen und/oder physikalischen Treibmitteln (speziell Wasser), und
d) gegebenenfalls flüssigen und/oder in a), b) oder c) löslichen Flammschutzmitteln und/oder
e) gegebenenfalls Verbindungen mit mindestens zwei gegenüber Isocyanaten reaktionsfähigen Wasserstoffatomen und einem Molekulargewicht von 32 bis 399, und/oder
f) gegebenenfalls weiteren Hilfsmitteln.

Als Komponente a) werden erfindungsgemäß Mischungen aus Toluylendiisocyanat (TDI) und Diphenylmethandiisocyanat (MDI) verwendet. Das Gewichtsverhältnis zwischen TDI und MDI beträgt 95:5 bis 60:40, bevorzugt 95:5 bis 70:30, insbesondere 95:5 bis 80:20. Das Isomerenverhältnis des 2,4-TDI zum 2,6-TDI kann von 100:0 bis 65:35 betragen. Bei dem eingesetzten MDI beträgt der Gehalt an zweikernigen Diisocyanaten, d.h. 2,2'-MDI, 2,4'-MDI und 4,4'-MDI, bevorzugt zwischen 35 und 100 Gew.-%, wobei der Anteil von 2,4'-MDI an der Gesamtmenge an MDI bevorzugt 0 bis 60 Gew.-% ausmacht. Es können also auch höhere Homologe der MDI-Reihe enthaltende Mischungen ("polymeres MDI", "rohes MDI") eingesetzt werden. Erfindungsgemäß können sowohl TDI als auch MDI in dem Fachmann bekannter Weise modifiziert sein, wie dies in G. Oertel (Hrsg.): "Kunststoff-Handbuch", Band VII, Carl Hanser Verlag, 3. Auflage, München 1993, S.91-97 beschrieben ist, d.h. beispielsweise allophanatisiert, biuretisiert, trimerisiert, carbodiimidisiert, oder prepolymerisiert mit Polyethern oder Teilen der Komponente b). Werden Mischungen eingesetzt in denen eine Isocyanatkomponente mit Polyethem oder Teilen der Komponente b) modifiziert sind, so berechnet sich das Gewichtsverhältnis von TDI zu MDI auf Basis der unmodifizierten Isocyanate.

Erfindungsgemäß enthält die Polyolkomponente b) Dispersionen von Polymeren enthaltenden höhermolekularen Hydroxylverbindungen, die durch Umsetzung von Mono- und/oder Polyisocyanaten mit primäre und oder sekundäre Aminogruppen aufweisenden Polyaminen und/oder Hydrazinen und/oder Hydraziden und/oder Alkanolaminen in einem 1 bis 8 primäre und/oder sekundäre Hydroxylgruppen aufweisenden Polyether mit einem zahlenmittleren Molekulargewicht von 400 bis 16000 ("Basispolyol") hergestellt worden sind. Bevorzugt kommen Basispolyole mit einem zahlenmittleren Molekulargewicht von 1500 bis 8000 zum Einsatz. Bevorzugt werden solche Hydroxylverbindungen eingesetzt, die durch Umsetzung von Polyetherpolyolen mit Hydrazinen hergestellt worden sind (PHD-Polyole). Bevorzugt weist die Komponente b) eine mittlere OH-Funktionalität von 2,0 bis 3,5 auf. Bevorzugt werden solche Polyetherpolyole eingesetzt, die einen Gehalt an primären OH-Gruppen von mindestens 60 mol-%, bevorzugt mindestens 70 mol-% aufweisen. In einer weiteren bevorzugten Ausführungsform enthält die Komponente bevorzugt zusätzlich zu einem Basispolyol mit einem Ethylenoxid-Gehalt von maximal 40 Gew.-% mindestens ein weiteres Polyetherpolyol mit einer mittleren Funktionalität von 2 bis 6, einem zahlenmittleren Molekulargewicht von 1500 bis 12000 in einem Mengenanteil von 1 bis 50 Gew.-%, bezogen auf die Gesamtmenge der Komponente b) mit einem EO-Gehalt von mehr als 40 Gew.-%. Diese Ausführungsform führt zu besserer Hautausbildung, erhöhter Offenzelligkeit und ermöglicht einen größeren Spielraum bei der Einstellung des NCO/OH-Index und somit bessere Verarbeitbarkeit der Formulierung. Es wird ein Schaum erhalten, der eine erhöhte Elastizität aufweist und dessen Härte, die durch die Polymerdispersion hoch sein kann, so weit reduziert wird, dass auch weiche Formteile hergestellt werden können.

Zur Herstellung der erfindungsgemäßen Schäume werden chemische und/oder physikalische Treibmittel c) verwendet. Als Komponente c) wird bevorzugt Wasser als chemisches Treibmittel eingesetzt, das durch Reaktion mit Isocyanatgruppen Kohlendioxid als Treibgas liefert. Bevorzugt wird Wasser in einer Menge von 2-8 Gew.-%, besonders bevorzugt 2 bis 4 Gew.-%, bezogen auf die Menge an Komponente b), eingesetzt. Kohlendioxid kann aber auch als Gas oder flüssig, online oder im Batch-Verfahren der Polyol- oder Isocyanatkomponente nach den an sich bekannten Verfahren zugesetzt werden. In Komponente c) können auch nicht brennbare physikalische Treibmittel wie z.B. Dichlormethan, Dichlormonofluormethan, Difluormethan, Trifluormethan, Difluorethan, 1,1,1,2-Tetrafluorethan, Tetrafluorethan (R 134 oder R 134a), 1,1,1,3,3,3-Hexafluorpropan (R 356), 1,1,1,3,3-Pentafluorpropan (R 245fa), Chlordifluorethane, 1,1-Dichlor-2,2,2-Trifluorethan, 2,2-Dichlor-2-fluorethan, Heptafluorpropan und Schwefelhexafluorid verwendet werden. Auch Gemische dieser Treibmittel sind verwendbar. Da das Treibmittel während des Herstellungsprozesses nahezu vollständig aus dem Schaum entweicht, können auch niedrigsiedende Kohlenwasserstoffe, z.B. Pentan, Hexan und deren Isomere eingesetzt werden. Weitere geeignete Treibmittel sind Carbonsäuren wie Ameisensäure, Essigsäure, Oxalsäure und chemische Treibmittel, die im Verlauf des Schäumprozesses Gase freisetzen wie z.B. Carbamate. Bevorzugt werden diese Treibmittel in Kombination mit Wasser eingesetzt.

Zur Herstellung der erfindungsgemäßen Schäume werden gegebenenfalls flüssige und/oder in einer oder mehreren der Komponenten a), b) oder c) lösliche Flammschutzmittel d) eingesetzt. Bevorzugt kommen handelsübliche phosphorhaltige Flammschutzmittel zum Einsatz, beispielsweise Trikresylphosphat, Tris-(2-chlorethyl)-phosphat, Tris-(2-chlorpropyl)phosphat, Tris-(2,3-dibrompropyl)phosphat, Tris-(1,3-dichlorpropyl)phosphat, Tetrakis-(2-chlorethyl)ethylendiphosphat, Dimethylmethanphosphonat, Diethylethanphosphonat, Diethanolaminomethylphosphonsäurediethylester. Ebenfalls geeignet sind halogen- und/oder phosphorhaltige, flammschützend wirkende Polyole. Die Flammschutzmittel werden bevorzugt in einer Menge von maximal 35 Gew.-%, bevorzugt maximal 20 Gew.-%, bezogen auf Komponente b), eingesetzt.

Bei der Herstellung der erfindungsgemäßen Schäume werden gegebenenfalls Verbindungen mit mindestens zwei gegenüber Isocyanaten reaktionsfähigen Wasserstoffatomen und einem Molekulargewicht von 32 bis 399 e) mitverwendet. Man versteht hierunter Hydroxylgruppen und/oder Aminogruppen und/oder Thiolgruppen und/oder Carboxylgruppen aufweisende Verbindungen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispiele hierfür werden in DE-OS 28 32 253, S.10-20 beschrieben. In einer bevorzugten Ausführungsform kommen Mischungen von mindestens zwei dieser Kettenverlängerungs- und/oder Vemetzungsmittel zum Einsatz. Bevorzugte Kettenverlängerungs- und/oder Vernetzungsmittel sind beispielsweise Glycerin, Ethylenglykol, Diethanolamin, Triethanolamin und Triisopropanolamin.

Bei der Herstellung der erfindungsgemäßen HR-Kaltformschäume können gegebenenfalls weitere Hilfs- und Zusatzstoffe f) mit zugesetzt werden. Dies sind beispielsweise Katalysatoren, die die Reaktion zwischen der Isocyanatkomponente a) und der Polyolkomponente b) beschleunigen. Beispiele für geeignete Katalysatoren sind organische Zinnverbindungen wie Zinn(II)salze organischer Carbonsäuren, z.B. Zinn(II)acetat, Zinn(II)octoat, Zinn(II)ethylhexoat und Zinn(II)laurat und die Dialkylzinn(IV)salze z.B. Dibutylzinndiacetat, Dibutylzinndilaurat und Dioctylzinndiacetat. Weitere Beispiele für geeignete Katalysatoren sind Amine wie Dimethylaminopropylhamstoff, Dimethylaminopropylamin, Bis (dimethylaminopropyl)amin, Diazabicyclooctan, Dimethylethanolamin, Triethylamin, Dimethylcyclohexylamin, Dimethylbenzylamin, Pentamethyldiethylentriamin, N,N,N',N'-Tetramethylbutandiamin, N-Methylmorpholin, Bis(dimethylaminoethyl)ether und Tris(dialkylaminoalkyl)-s-hexahydrotriazine. Bevorzugt enthält die Katalysatorkomponente mindestens ein aliphatisches Amin. Es kann auch eine Kombination mehrerer Katalysatoren verwendet werden. Mitverwendet werden können auch beispielsweise Paraffine oder Fettalkohole oder Dimethylpolysiloxane sowie Pigmente oder Farbstoffe, ferner Stabilisatoren gegen Alterungs- und Witterungseinflüsse, Weichmacher wie Dioctylphthalat und fungistatisch und bakteriostatisch wirkende Substanzen. Diese werden meist der Polyolkomponente in Mengen von 0 bis 10 Gewichtsteilen, bevorzugt 0 bis 5 Gewichtsteilen zugesetzt. Weitere Beispiele von gegebenenfalls mitzuverwendenden oberflächenaktiven Zusatzstoffen und Schaumstabilisatoren sowie Zellreglem, Reaktionsverzögerem, Stabilisatoren, flammhemmenden Substanzen, Farbstoffen sowie fungistatisch und bakteriostatisch wirksamen Substanzen sowie Einzelheiten über Verwendungs- und Wirkungsweise dieser Zusatzmittel sind in G. Oertel (Hrsg.):"Kunststoff-Handbuch", Band VII, Carl Hanser Verlag, 3. Auflage, München 1993, S. 110-115 und DE-OS 27 32 292 beschrieben.

Die Reaktionskomponenten werden üblicherweise nach dem an sich bekannten Einstufenverfahren, dem Prepolymerverfahren oder dem Semiprepolymerverfahren zur Umsetzung gebracht, wobei man sich oft maschineller Einrichtungen bedient, z. B. solcher, die in der US-Patentschrift 2 764 565 beschrieben werden. Einzelheiten über Verarbeitungseinrichtungen, die auch erfindungsgemäß infrage kommen, werden in R.Vieweg, A. Höchtlen (Hrsg.): "Kunststoff-Handbuch", Band VII, Carl-Hanser-Verlag, München 1966, S. 121-205 beschrieben. Erfindungsgemäß wird die Verschäumung vorzugsweise in geschlossenen Formen durchgeführt. Dabei wird das Reaktionsgemisch in eine Form eingetragen. Als Formmaterial kommt Metall, z. B. Aluminium oder Kunststoff, z. B. Epoxidharz, infrage. In der Form schäumt das schaumfähige Reaktionsgemisch auf und bildet den Formkörper. Erfindungsgemäß kann man in diesem Zusammenhang so vorgehen, dass man in die Form so viel schaumfähiges Reaktionsgemisch einträgt, dass der gebildete Schaumstoff die Form gerade ausfüllt. Man kann aber auch so arbeiten, dass man mehr schaumfähiges Reaktionsgemisch in die Form einträgt, als zur Auffüllung des Forminneren mit Schaumstoff notwendig ist. Im letztgenannten Fall wird somit unter "over-charging" gearbeitet; eine derartige Verfahrensweise ist z. B. aus den US-Patentschriften 3 178 490 und 3 182 104 bekannt.

Bevorzugt wird die Herstellung der erfindungsgemäßen Schaumstoffe so vorgenommen, dass der NCO/OH-Index, d.h. das stöchiometrische Verhältnis zwischen reaktiven Isocyanatgruppen und Hydroxylgruppen multipliziert mit 100, zwischen 65 und 120 beträgt. Besonders bevorzugt beträgt der NCO/OH-Index 70 bis 110.

Das Raumgewicht der entstehenden Formkörper beträgt bevorzugt 30 bis 120 kg/m³. In einer bevorzugten Ausführungsform der Erfindung wird das Verhältnis der Komponenten so gewählt, dass der Füllstoffgehalt der Schaumfonnulierung, d.h. der Anteil der in der Komponente b) enthaltenen dispergierten Polymerkomponente an der Gesamtmenge der Schaumformulierung, 3 bis 30 Gew.-%, bevorzugt 4 bis 16 Gew.-% beträgt.

Gegenstand der Erfindung ist auch die Verwendung der erfindungsgemäßen Schaumstoffe als Polstermaterial für z. B. Sitze, Rücken- und Armlehnen sowie Kopfstützen im Automobil, in Schienenfahrzeugen, in Flugzeugen und Wasserfahrzeugen und in Möbeln für private und öffentliche Anwendungen.

### Beispiele

Die folgenden Abkürzungen werden im folgenden verwendet:
- **Polyol A:**: Polyethertriol, OHZ 28, EO-Gehalt ca. 13,5 Gew.-%, gefüllt mit
20 Gew.-% Polyharnstoffdispersion
(Desmophen® 7619 der Bayer AG)
- **Polyol B:**: Polyethertriol, OHZ 28, EO-Gehalt ca. 13,5 Gew.-%, gefüllt mit
20 Gew.-% Styrol-Acrylnitrilpolymer
(Bayfit® 3699 der Bayer AG)
- **Polyol C:**: Polyetherpolyol PIPA, Herstellung siehe unten
- **Polyol D:**: Polyethertriol, OHZ 28, EO-Gehalt ca. 13,5 Gew.-%
- **Polyol E:**: Polyetherdiol, OHZ 28, EO-Gehalt ca. 13,5 Gew.-%
- **Polyol F:**: Polyethertriol, OHZ 37, EO-Gehalt ca. 85 Gew.-%
- **Polyol G:**: Polyetherdiol, OHZ 56, EO-Gehalt ca. 50 Gew.-%
- **Isocyanat 1:**: TDI mit 80 % des 2,4-Isomeren (Desmodur® T80 der Bayer AG)
- **Isocyanat 2:**: polymeres MDI mit einem NCO-Gehalt von 31,5 Gew.-%
(Desmodur® 44V20 der Bayer AG)
- **Isocyanat 3:**: modifiziertes TDI (Biuret) mit einem NCO-Gehalt von 42 Gew.-%
- **Isocyanat 4:**: modifiziertes TDI (Biuret) mit einem NCO-Gehalt von 37 Gew.-%
- **Isocyanat 5:**: TDI mit ca. 100 % des 2,4-Isomeren (Desmodur® T100 der Bayer AG)
- **Isocyanat 6:**: modifiziertes MDI (Isocyanat 7 prepolymerisiert mit Polyol G)
mit einem NCO-Gehalt von ca. 26 Gew.-%
- **Isocyanat 7:**: MDI mit ca. 100% Zweikernanteil, davon 53 % 2,4'-MDI,
NCO-Gehalt ca. 33,5 Gew.-%
- **Isocyanat 8:**: mit einem hexafunktionellen Polyether der OHZ 28 modifiziertes
MDI mit einem Zweikernanteil von 85 Gew.-% und einem 2,4'-MDI-Gehalt von ca. 24 Gew.-%, NCO-Gehalt 25 Gew.-%
- **L 3200:**: Schaumstabilisator (Niax® Silicone L 3200, Witco Surfactants GmbH, D-36396 Steinau)
- **L 3100:**: Schaumstabilisator (Niax® Silicone L 3100, Witco Surfactants GmbH, D-36396 Steinau)
- **L 3002:**: Schaumstabilisator (Niax® Silicone L 3002, Witco Surfactants GmbH, D-36396 Steinau)
- **B 4690:**: Schaumstabilisator (Tegostab® B 4690, Th. Goldschmidt AG,
D-45127 Essen)
- **A1:**: Bis(dimethylaminoethyl)ether, 70 %ig in Dipropylenglykol (Niax®
Catalyst A1, Witco Surfactants GmbH, D-36396 Steinau)
- **DMAPA:**: Dimethylaminopropylamin
- **33 LV:**: Dabco® 33 LV, Diazabicyclooctan 33 %ig, in Dipropylenglykol
(Air Products GmbH, D-45527 Hattingen)
- **TCPP:**: Tris(2-chlorpropylphosphat) (Levagard® PP der Bayer AG)
- **DABCO® 8154:**: Aminkatalysator (Air Products GmbH, D-45527 Hattingen)
- **TEA:**: Triethylamin

### Herstellung Polvot C

90 Gew.-Teile eines Polyethertriols (OHZ 35, EO-Gehalt ca. 13,5 Gew.-%) wurden mit 5 Gew.-Teilen Triethanolamin intensiv bei Raumtemperatur vermischt. Danach versetzte man die Mischung unter Homogenisieren mit 5 Gew.-Teilen TDI 80. Die anfangs klare Mischung wurde trübe durch das feinteilige Ausfallen der PolymerDispersion. Nach 12 h Tempern bei 50°C und anschließendem Abkühlen auf Raumtemperatur konnte die Polymerdispersion weiterverarbeitet werden. Die OH-Zahl betrug etwa 57, der Füllstoffgehalt ca. 10 Gew.-%.

### Herstellung der Schaumstoffe:

Die in den Tabellen angegebenen Verhältniszahlen beziehen sich auf Gewichtsteile der entsprechenden Komponenten.

Die Polyolformulierung wurde durch Mischen der entsprechenden Gew.-Teile der Einzelkomponenten hergestellt und mit den entsprechenden Gew.-Teilen des Isocyanates intensiv vermischt (Beispiel 1 bis 22) bzw. über eine Hochdruckanlage verarbeitet (Beispiel 23 bis 31). Die Reaktionsmischung wurde in eine auf 40°C vorgeheizte Aluminiumform eingebracht, die Form mit einem Aluminiumdeckel geschlossen und die Reaktionsmischung aufschäumen gelassen. Nach 7 Minuten wurden die Schaumstoffe entformt.

### Tabelle 1:

Die mit einem SAN-gefüllten Polyol bzw. Basispolyol (Vergleichsbeispiel 1 bzw. 2) unter Verwendung einer Mischung aus TDI und MDI hergestellten Schaumstoffe gingen im Brandtest in Vollbrand über und mussten gelöscht werden. Die erfindungsgemäßen Schaumstoffe (Beispiele 3 und 4) bestanden den Test. Vergleichsbeispiel 5 auf Basis von modifiziertem MDI und Vergleichsbeispiel 6 auf Basis einer TDI-MDI-Mischung im Verhältnis 40:60 mussten gelöscht werden.

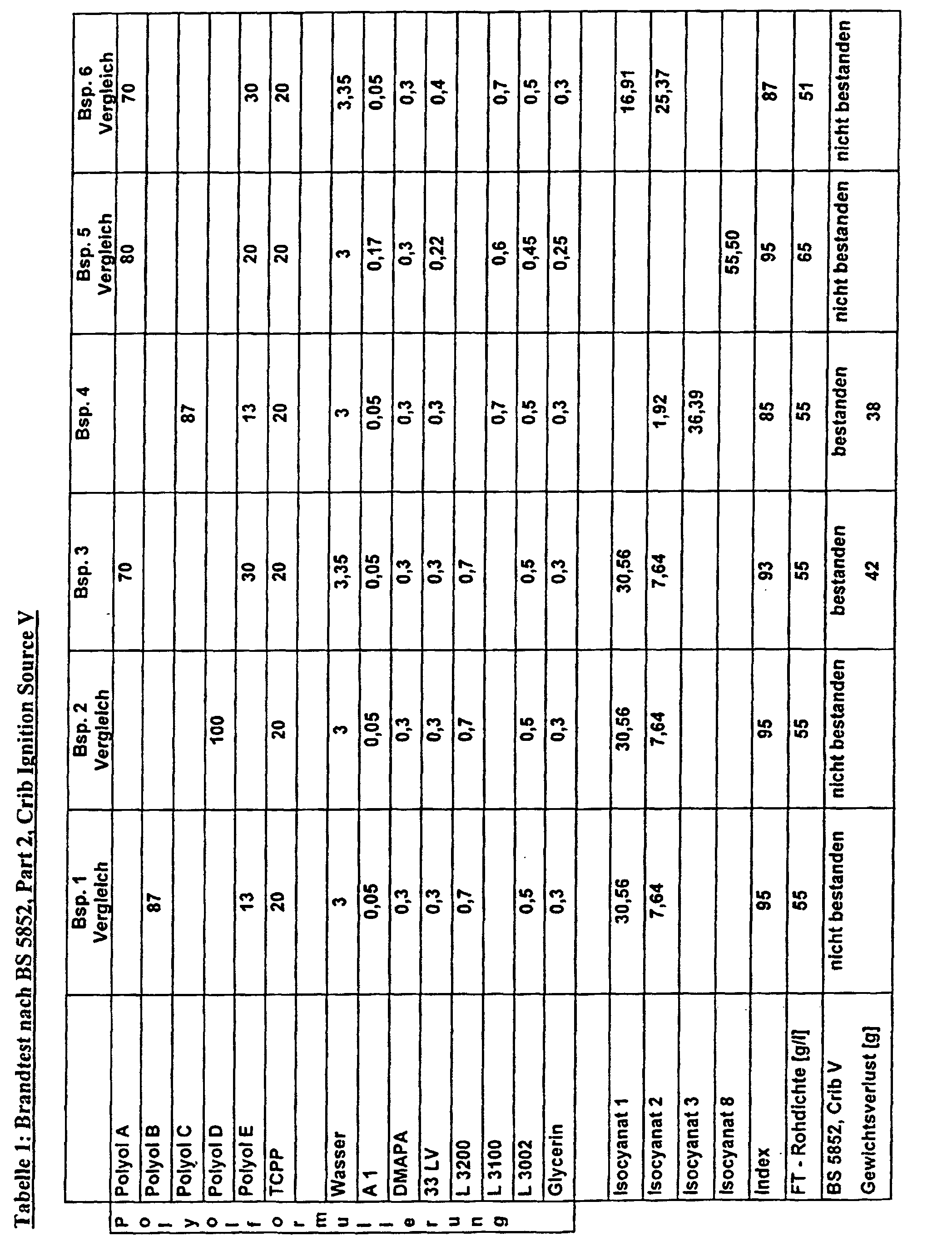

### Tabelle 2:

Die mit der erfindungsgemäßen Polyolformulierung und den erfindungsgemäßen MDI-TDI-Mischungen hergestellten Schaumstoffe bestanden den Brandtest.

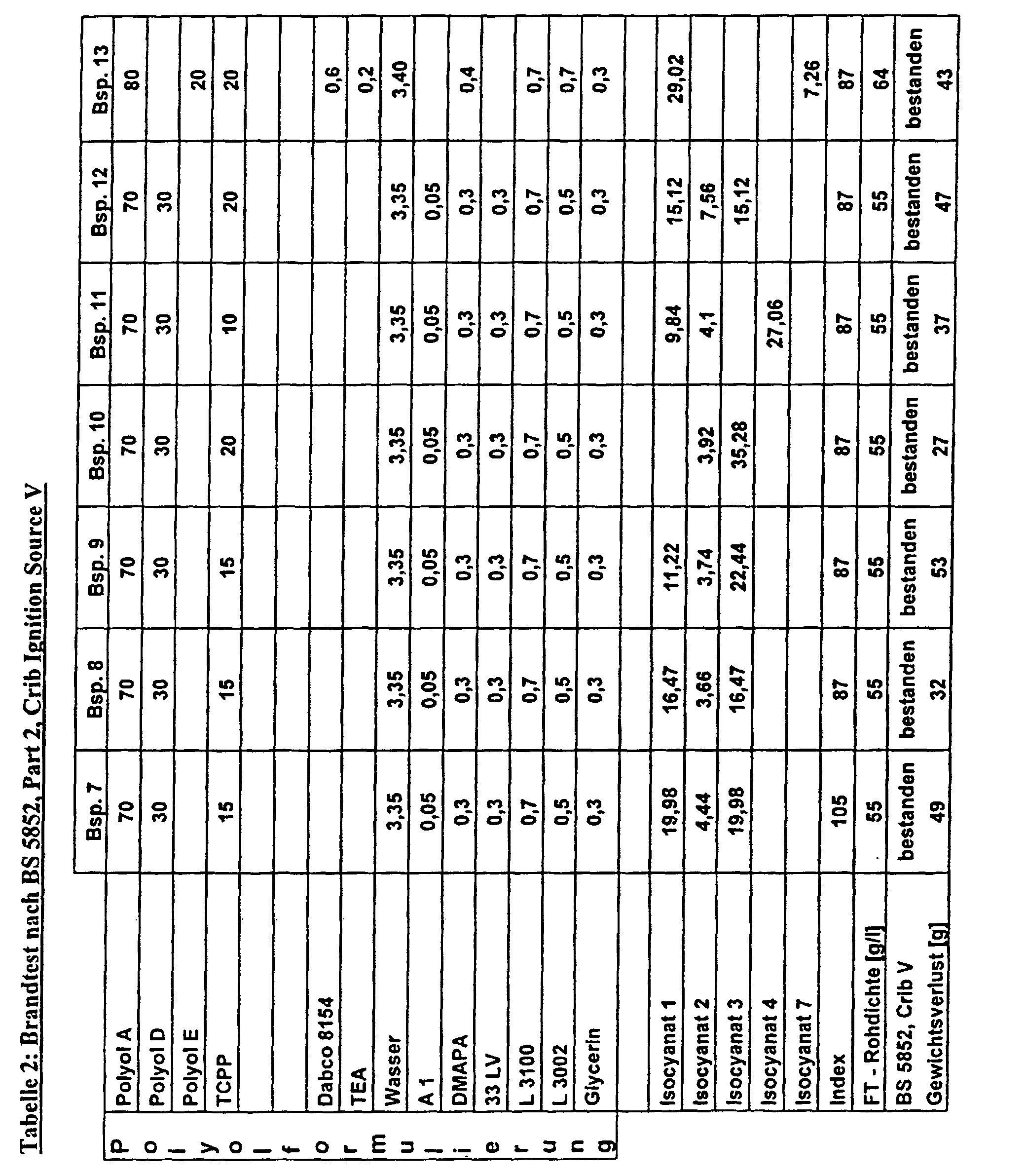

### Tabelle 3:

Die erfindungsgemäßen Schaumstoffe bestanden den Brandtest.

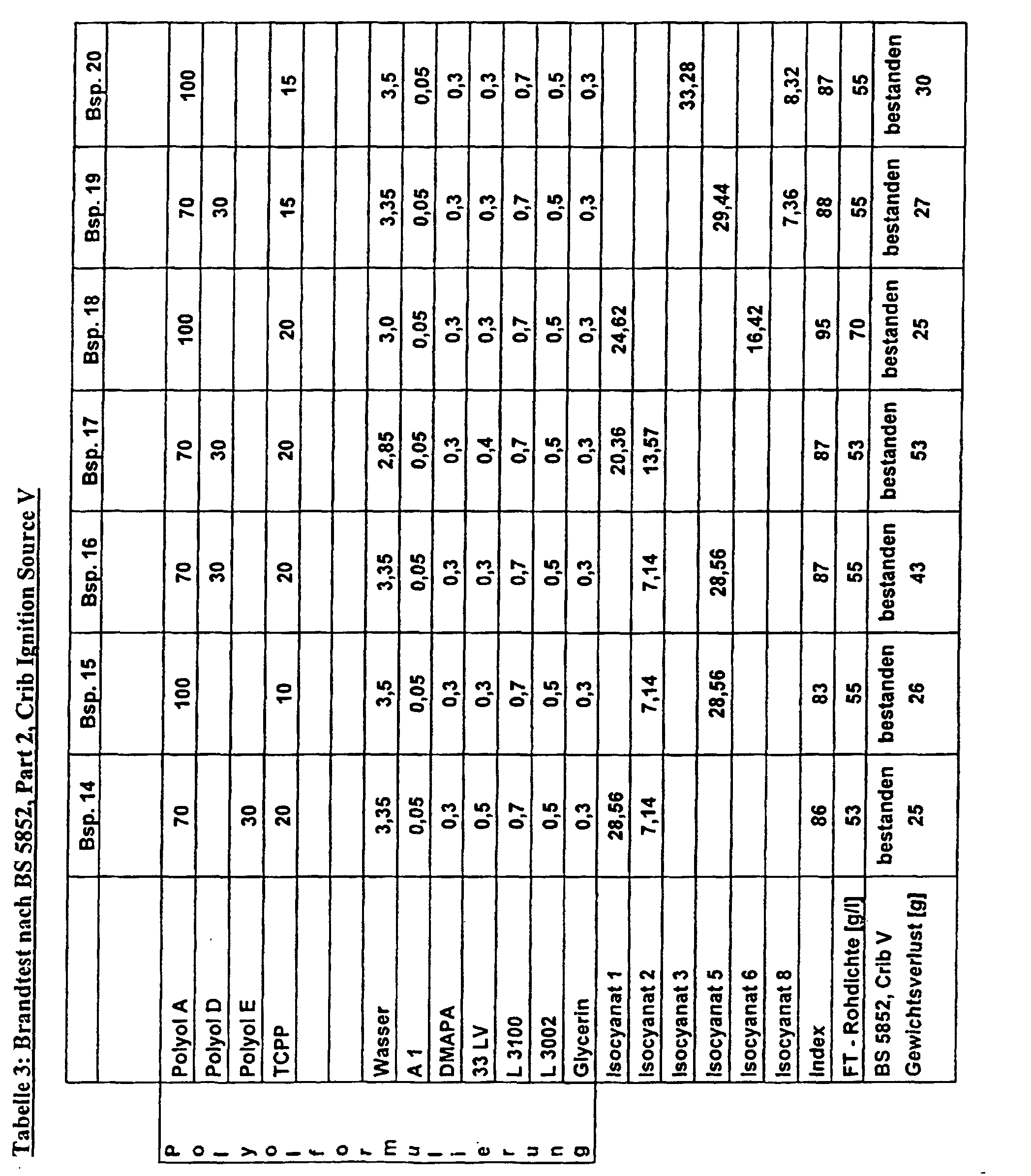

### Tabelle 4:

Die erfindungsgemäßen Schaumstoffe unter Mitverwendung von EO-reichen Polyethern bestanden den Brandtest.

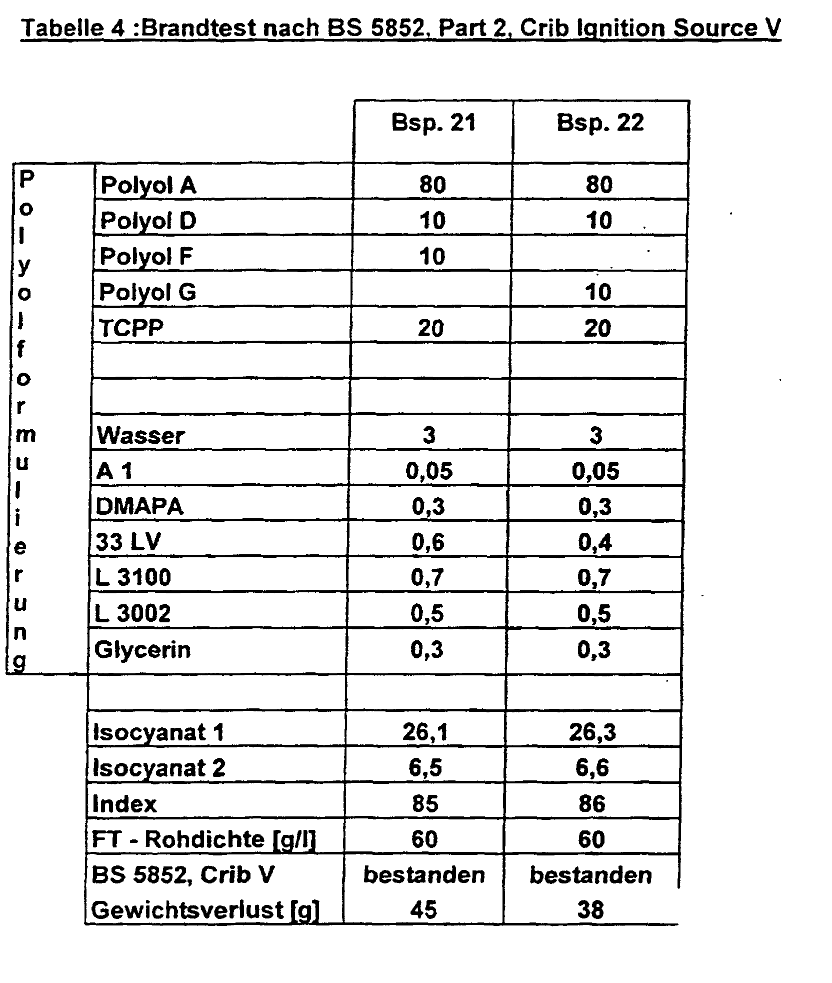

### Tabelle 5:

Die erfindungsgemäßen Schaumstoffe bestanden auch unter Verzicht auf weitere flüssige Flammschutzmittel (Beispiel 23) den Brandtest.

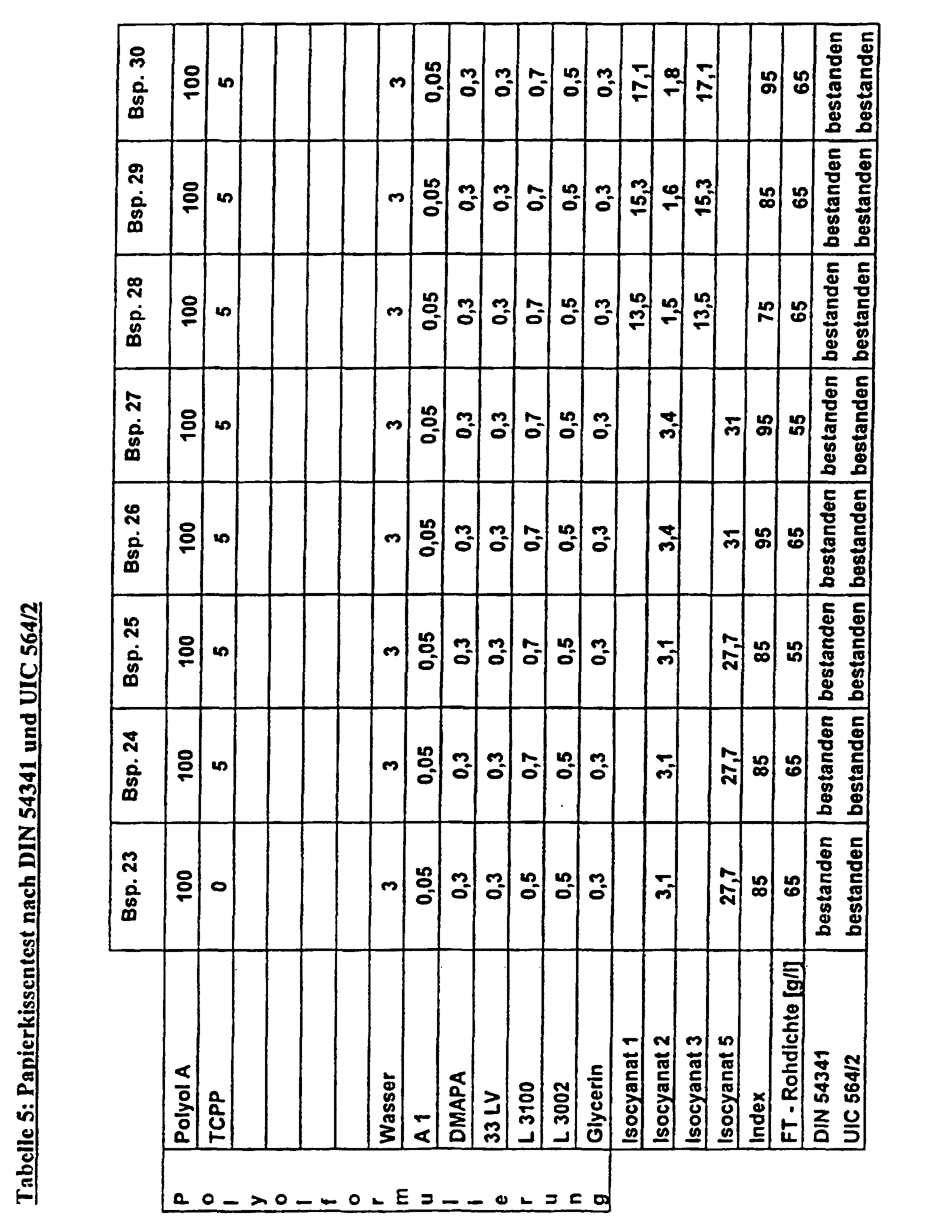

### Tabelle 6:

Der erfindungsgemäße Schaum (Beispiel 23) liefert günstigere Werte der Rauchgasdichte und -toxizität als das Vergleichsbeispiel 31.

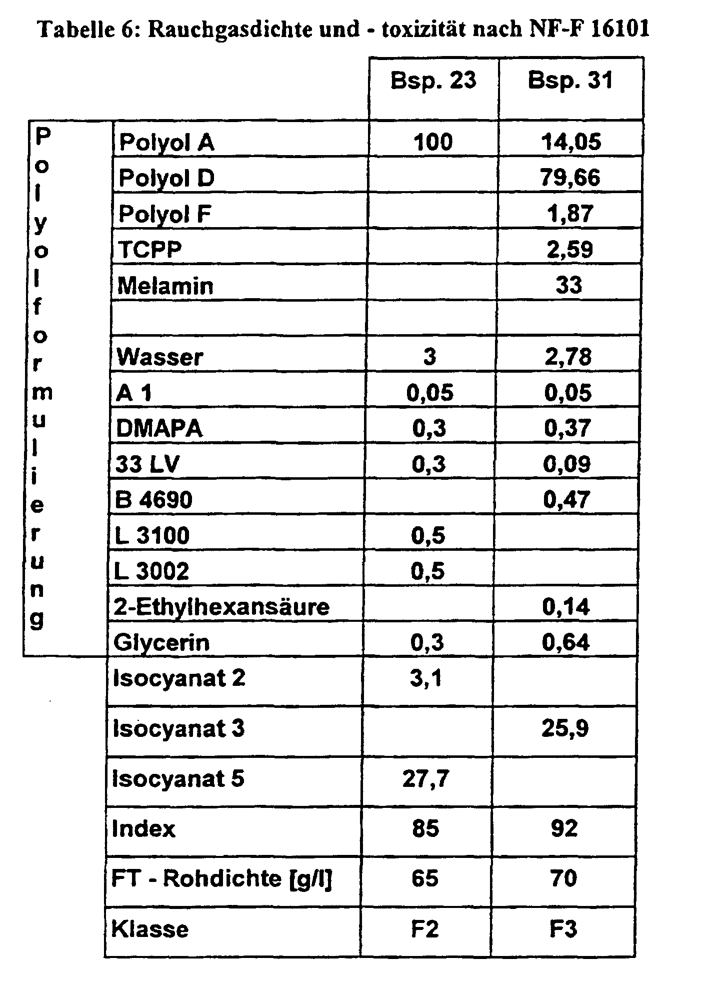

## Patentansprüche

1. HR-Kaltformschaum, erhältlich durch Umsetzung von
a) Mischungen aus TDI und MDI im Gewichtsverhältnis 95:5 bis 60:40 mit
b) Dispersionen von Polymeren enthaltenden höhermolekularen Hydroxylverbindungen, die durch Umsetzung von Mono- und/oder Polyisocyanaten mit primäre und oder sekundäre Aminogruppen aufweisenden Polyaminen und/oder Hydrazinen und/oder Hydraziden und/oder Alkanolaminen in einem 1 bis 8 primäre und/oder sekundäre Hydroxylgruppen aufweisenden Polyether mit einem zahlenmittleren Molekulargewicht von 400 bis 16000 hergestellt worden sind,
c) in Gegenwart von chemischen und/oder physikalischen Treibmitteln (speziell Wasser), und
d) gegebenenfalls flüssigen und/oder in a), b) oder c) löslichen Flammschutzmitteln und/oder
e) gegebenenfalls Verbindungen mit mindestens zwei gegenüber Isocyanaten reaktionsfähigen Wasserstoffatomen und einem Molekulargewicht von 32 bis 399, und/oder
f) gegebenenfalls weiteren Hilfsmitteln.

2. Verfahren zur Herstellung von HR-Kaltformschaum gemäß Anspruch 1, bei dem die Mischungen aus TDI und MDI a) oder Komponenten davon zunächst mit einem Teil der Komponente b) zu einem Prepolymer umgesetzt werden und dieses Prepolymer anschließend mit dem Rest der Komponente b) und den Komponenten c) bis f) zum HR-Kaltformschaum umgesetzt wird.

3. Verwendung von HR-Formschaum gemäß Anspruch 1 als Polstermaterial.

## Claims

1. HR cold-cure foam, which may be obtained by reacting
a) mixtures of TDI and MDI in the weight ratio 95:5 to 60:40 with
b) dispersions of relatively high molecular weight hydroxyl compounds containing polymers which were prepared by reacting mono- and/or polyisocyanates with polyamines and/or hydrazines and/or hydrazides and/or alkanolamines having primary and/or secondary amino groups in a polyether having 1 to 8 primary and/or secondary hydroxyl groups with a number-average molecular weight from 400 to 16000,
c) in the presence of chemical and/or physical blowing agents (specially water), and
d) optionally flame retardants which are liquid and/or soluble in a), b) or c), and/or
e) optionally compounds with at least two hydrogen atoms which are reactive towards isocyanates and with a molecular weight from 32 to 399, and/or
f) optionally further auxiliary substances.

2. A process for the preparation of HR cold-cure foam according to claim 1, wherein the mixtures of TDI and MDI a) or components thereof are reacted initially with a part of component b) to a prepolymer and said prepolymer is then reacted with the remainder of component b) and components c) to f) to the HR cold-cure foam.

3. Use of HR moulded foam according to claim 1 as upholstery material.

## Revendications

1. Mousse HR moulée à froid obtenue par réaction de
a) mélanges de TDI et MDI dans un rapport pondéral de 95:5 à 60:40 avec
b) des dispersions de composés hydroxylés de poids moléculaire élevé contenant des polymères, qui ont été préparés par réaction de mono et/ou polyisocyanates avec des polyamines et/ou hydrazines et/ou hydrazides et/ou alcanolamines présentant des radicaux amino primaires et/ou secondaires dans un polyéther présentant 1 à 8 radicaux hydroxyle primaires et/ou secondaires avec un poids moléculaire moyen en nombre de 400 à 16000,
c) en présence d'agents moussants chimiques et/ou physiques (en particulier, l'eau), et
d) éventuellement des agents ignifuges liquides et/ou solubles dans a), b) ou c) et/ou
e) éventuellement des composés avec au moins deux atomes d'hydrogène réactifs par rapport aux isocyanates et un poids moléculaire de 32 à 399 et/ou
f) éventuellement, d'autres adjuvants.

2. Procédé de préparation de mousse HR moulée à froid selon la revendication 1, dans lequel les mélanges de TDI et MDI a) ou des composants de ceux-ci sont d'abord mis en réaction avec une partie du composant b) pour former un prépolymère et ce prépolymère est ensuite amené à réagir avec le reste du composant b) et les composants c) à f) pour former de la mousse HR moulée à froid.

3. Mise en oeuvre de mousse HR moulée selon la revendication 1 comme matière de rembourrage.
